# EUROPEAN PATENT APPLICATION

(11) **EP 1 482 738 A2**
(43) Date of publication of application: **01.12.2004**
(21) Application number: 04252796.0
(22) Date of filing: 14.05.2004
(51) Int. Cl.: H04N 7/173, G06F 17/30, G06F 17/60, H04H 1/00, G11B 27/00

(54) **Data processing device, data processing system, data processing method, data processing program and recording medium storing the program**

(30) Priority: 15.05.2003 JP 2003137009
(71) Applicant: Pioneer Corporation, Tokyo 153-0063 (JP)
(72) Inventor: Sugihara, Motooki, c/o Pioneer Corporation, Tokorozawa-shi Saitama 359-8522 (JP)
(74) Representative: Haley, Stephen

(57) **Abstract**

A part of the data stored in a disk D is stored in an HDD (420) having a reading speed for reading the stored data and outputting them higher than the reading speed of a data reading section (410) for reading the data recorded in the disk D and outputting them. When a request information requesting distribution of the data is recognized, a content distributor (430) and content administrator (440) cause the HDD (420) to read and output the part of the data, while they cause the data reading section (410) to read and output the remaining part of the data recorded in the disk D.

## Description

The present invention relates to a data processing device adapted to output data recorded in recording mediums, a data processing system, a data processing method and a data processing program as well as a recording medium storing the program.

Distributing devices for distributing broadcast and recorded contents within homes, for distributing contents within closed spaces such as hotels and libraries by way of the Internet protocols, and for distributing contents by way of the Internet are known. Contents are temporarily stored in storage section before they are delivered from a distributing device. Such storage section include hard disk drives (to be referred to as HDDs hereinafter) that have a high reading speed for reading and outputting data and less expensive recording mediums such as magneto-optical disks. Since an HDD is expensive compared with a magneto-optical disk although its reading speed is high, a distributing device having a large storage capacity will be costly if HDDs are used. On the other hand, while magneto-optical disks are less expensive, the data reading speed of a data reading section adapted to read data from such a disk is low. A combination of the two is already known, for example, as described in a patent document 1 (Japanese Patent Laid-Open Publication No. Hei11-252486, Clause Nos. 0199 through 0222).

According to the patent document 1, the contents to be distributed are divided and stored in a first memory device including high speed memory mediums whose data reading speed is high and a second memory device including low speed memory mediums whose data reading speed is low. While the service of distributing contents is at rest, the contents that have been requested from receiving devices for distribution for a number of times exceeding a predetermined threshold value are stored in the first memory device and those that have been requested for distribution for a number of times not exceeding the predetermined threshold value are stored in the second memory device for relocation. With this arrangement of using memory devices having respectively high speed memory mediums having a high reading speed and low speed memory mediums having a low reading speed, it is possible to provide a distributing device having a less expensive large storage capacity. Additionally, highly popular contents can be distributed quickly to receiving devices when such contents are distributed from the high-speed memory medium.

However, with the arrangement of the above cited patent document 1, in the case that the distributing device has a lot of highly popular contents or the number of accesses to the distributing devices are increased, the number of the contents that have been requested for distribution for a number of times exceeding the above-described threshold value can become large. Then, all such popular contents may need to be stored in the first memory device in order to quickly distribute them. Then, the number and the storage capacity of high-speed memory mediums of the first memory need to be increased. Thus, while such a distributing device has a large storage capacity and can distribute popular contents quickly to receiving devices, it is costly because the number of high-speed memory mediums that are more expensive than low speed memory mediums has to be increased.

In view of the above identified problem, it is therefore an object of the present invention to provide a data processing device that can be configured so as to have a large storage capacity and output data quickly, a data processing system, a data processing method, a data processing program to be used with such a data processing device, and a recording medium storing the program.

In an aspect of the present invention, there is provided a data processing device adapted to output data recorded in recording mediums, the device having: a data reading section for reading data recorded in the recording mediums and outputting them; a storage section for storing part of the data, the storage section having a reading speed for reading the stored data and outputting them higher than a reading speed of the data reading section; and a controller for causing the storage section to read and output the part of the data stored therein by recognizing a request signal requesting output of the data, and for causing the data reading section to read and output the remaining part of the data other than the part output from the storage section.

In another aspect of the invention, there is provided a data processing device adapted to output data recorded in recording mediums, the device having: a data reading section for reading data recorded in the recording mediums and outputting them; a storage section for storing part of the data, the storage section having a reading speed for reading the stored data and outputting them higher than a reading speed of the data reading section; a request signal acquiring section for acquiring a request signal requesting output of the data; a partial data acquiring section for acquiring part of the requested data from the storage section; a remaining data acquiring section for acquiring the remaining part of the requested data from the data reading section other than the part; and a controller for causing the partial data acquiring section to acquire and output the part of the data upon recognition of the acquisition of the request signal by the request signal acquiring section, while causing the remaining data acquiring section to acquire and output the remaining part of the data.

In still another aspect of the invention, there is provided a data processing system for outputting data from a server unit having recording mediums storing data to terminal units connected to the server unit by way of a network so as to be able to exchange various types of information; the server unit having: a data reading section for reading data recorded in the recording mediums and outputting them; a storage section for storing part of the data, the storage section having a reading speed for reading the stored data and outputting them higher than the reading speed of the data reading section for reading the data recorded in the recording mediums and outputting them; and a controller for causing the storage section to read and output the part of the data stored therein by recognizing a request signal requesting output of the data, and for causing the data reading section to read and output the remaining part of the data other than the part output from the storage section; each of the terminal unit having: a request signal generator for generating the request signal; and a transceiver for transmitting the request signal to the server unit by way of the network and receiving the data output from the server unit.

In still another aspect of the invention, there is provided a data processing system for outputting data from a server unit having recording mediums storing data to terminal units connected to the server unit by way of a network so as to be able to exchange various pieces of information; the server unit having: a data reading section for reading data recorded in the recording mediums and outputting them; a storage section for storing part of the data, the storage section having a reading speed for reading the stored data and outputting them higher than the reading speed of the data reading section for reading the data recorded in the recording mediums and outputting them; a request signal acquiring section for acquiring a request signal requesting output of the data; a partial data acquiring section for acquiring part of the requested data from the storage section; a remaining data acquiring section for acquiring the remaining part of the requested data from the data reading section other than the part; and a controller for causing the partial data acquiring section to acquire and output the part of the data upon recognition of the acquisition of the request signal by the request signal acquiring section, while causing the remaining data acquiring section to acquire and output the remaining part of the data; each of the terminal unit having: a request signal generator for generating the request signal; and a transceiver for transmitting the request signal to the server unit by way of the network and receiving the data output from the server unit.

In still another aspect of the invention, there is provided a data processing method adapted to output data recorded in recording mediums by a computing section, in which the computing section storing part of the data in a storage section having a reading speed for reading the stored data and outputting them higher than the reading speed of a data reading section for reading the data recorded in the recording mediums and outputting them; causing the storage section to read and output the part of the data stored therein by recognizing a request signal requesting output of the data, and the data reading section to read and output the remaining part of the data other than the part output from the storage section.

In still another aspect of the invention, there is provided a data processing method adapted to output data from a server unit having recording mediums storing the data to terminal units connected to the server unit so as to be able to exchange various types of information by way of a network, in which the computing section causing the server unit to store part of the data in a storage section having a reading speed for reading the stored data and outputting them higher than the reading speed of a data reading section for reading the data recorded in the recording mediums and outputting them; causing each of the terminal units to generate a request signal requesting output of the data and transmit the request signal to the server unit by way of the network; and causing the server unit to acquire and recognize the request signal and read out and output the part of data stored in the storage section, while causing the data reading section to read and output the remaining part of the data other than the part of the data output from the storage section.

In still another aspect of the invention, there is provided a data processing program adapted to cause a computing section to execute the data processing method.

In a further aspect of the invention, there is provided a recording medium storing the data processing program so as to be read out the data processing program by a computing section.

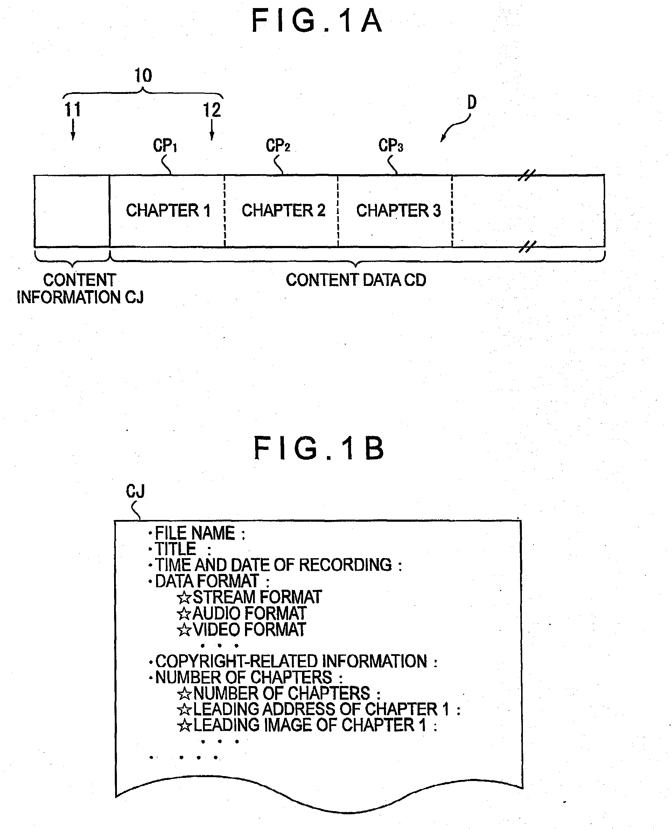

FIGS. 1A and 1B schematically illustrate a DVD to be used for an embodiment of the present invention, showing its configuration, of which
   FIG. 1A is a schematic illustration showing an outline of data stored on an information recording surface of the DVD and
   FIG. 1B is a schematic illustration showing an outline of information on a content;
FIG. 2 is a schematic block diagram of a contents distribution system of the embodiment;
FIG. 3 is a schematic block diagram of a receiving device of the embodiment;
FIG. 4 is a schematic block diagram of a distributing device of the embodiment;
FIG. 5 is a schematic block diagram of a contents distributor of the distributing device of the embodiment;
FIG. 6 is a schematic block diagram of a contents administrator of the distributing device of the embodiment;
FIG 7 is a schematic illustration showing an operation of adding a new disk to the embodiment;
FIGS. 8A and 8B schematically illustrate how data are moved when a new disk is added to the embodiment, of which

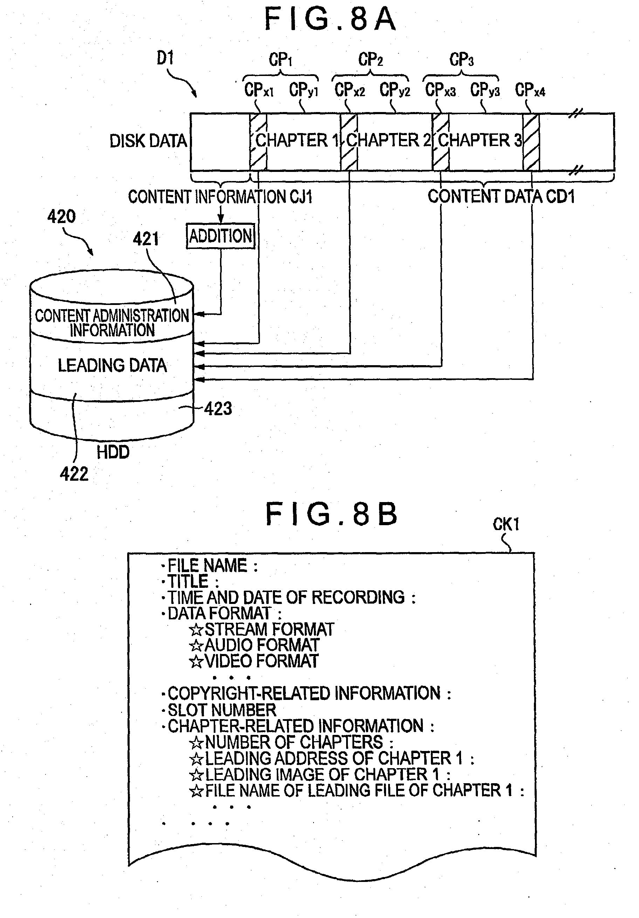

FIG 8A is a schematic illustration of movement of data between the disk and an HDD and
FIG 8B is a schematic illustration of the substance of content administration information;

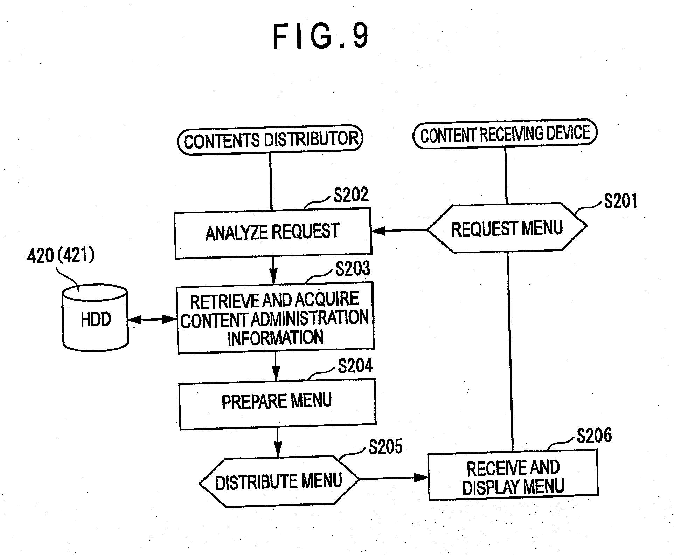

FIG. 9 is a schematic illustration of an operation of distributing a synoptic menu of the embodiment;

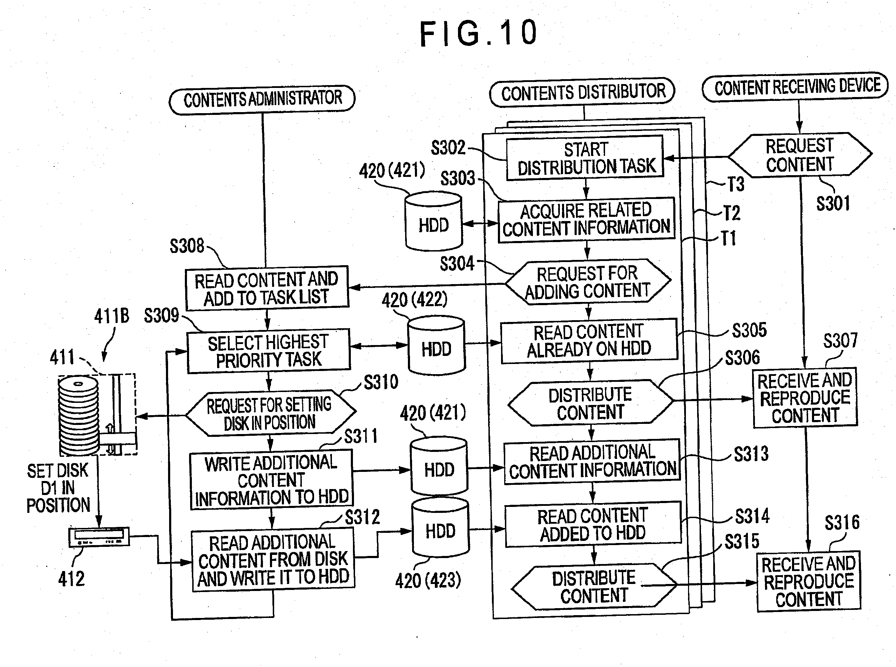

FIG 10 is a schematic illustration of an operation of distributing a content of the embodiment; and

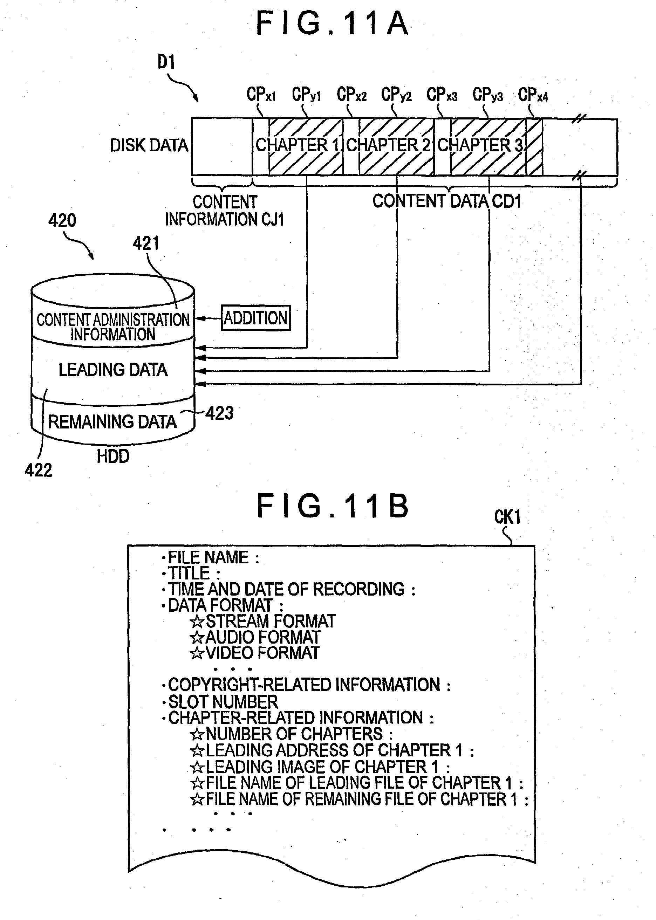

FIGS. 11A and 11B schematically illustrate how data are moved in an operation of distributing a content of the embodiment, of which
   FIG. 11A is a schematic illustration of movement of data between the disk and the HDD and
   FIG. 11B is a schematic illustration of the substance of content administration information.

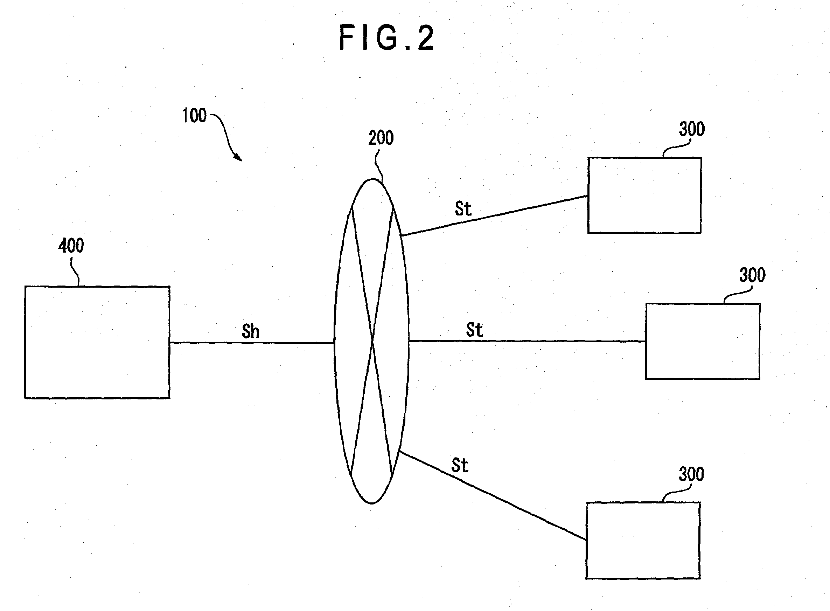

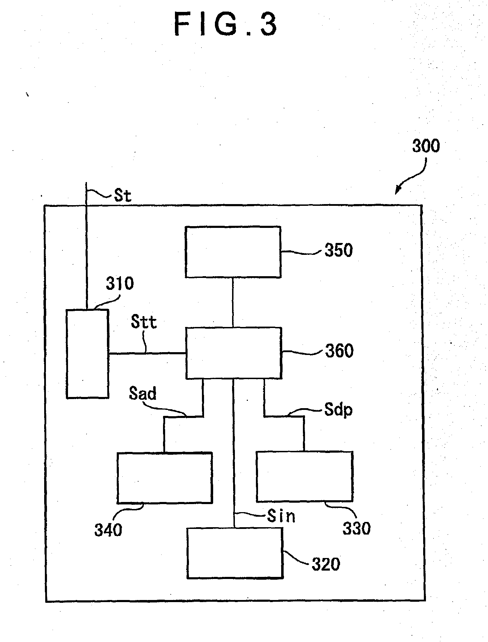

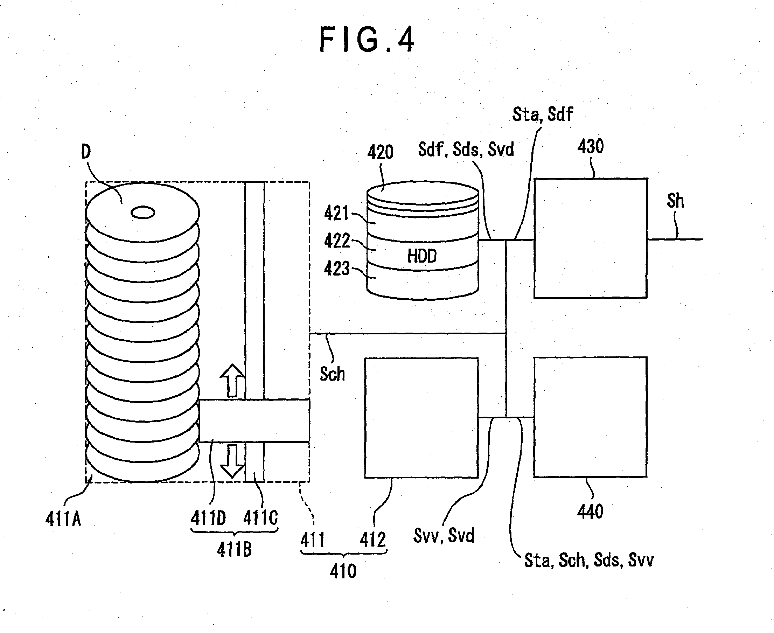

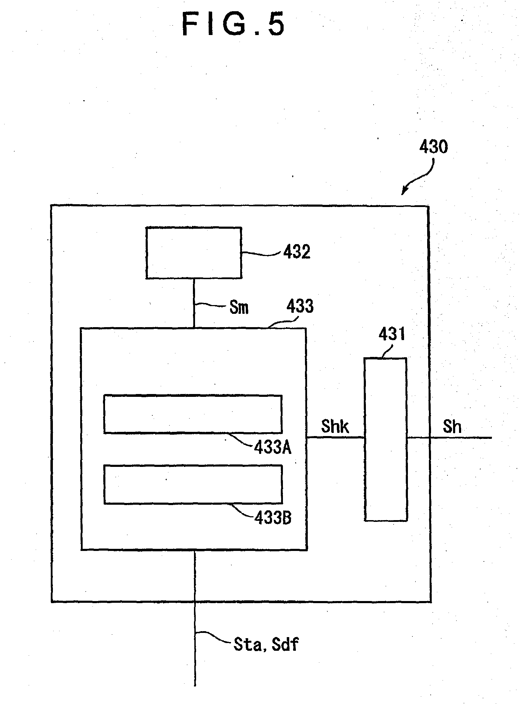

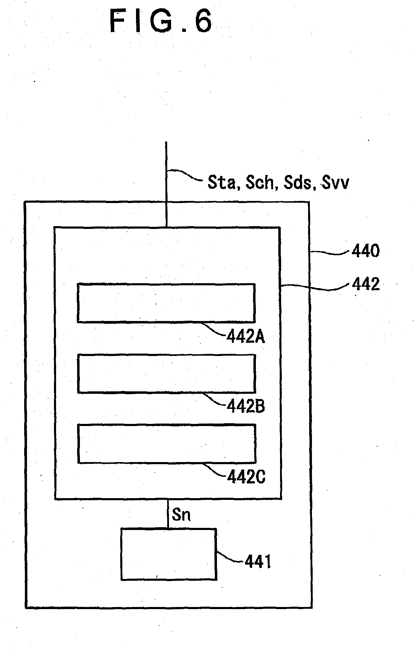

Now, an embodiment of the present invention will be described by referring to the accompanying drawings. Note that, the embodiment is described in terms of a contents distribution system adapted to distribute video data of contents recorded on DVDs (digital versatile disks) from a distributing device to receiving devices by way of a network. FIGS. 1A and 1B schematically illustrate a DVD to be used for an embodiment of the invention, showing its configuration. FIG. 1A is a schematic illustration showing an outline of data stored on an information, recording surface of the DVD and FIG 1B is a schematic illustration showing an outlase of information on a content. FIG. 2 is a schematic block diagram of a contents distribution system of this embodiment. FIG. 3 is a schematic block diagram of a receiving device of the embodiment. FIG. 4 is a schematic block diagram of a distributing device. FIG. 5 is a schematic block diagram of a contents distributor of the distributing device. FIG. 6 is a schematic block diagram of a contents administrator of the distributing device.

### [Structure of DVD]

In FIG. 1A, D generally denotes a DVD that serves as recording medium (to be referred to as disk hereinafter). While DVDs are used as recording mediums in the following description, the present invention is by no means limited to the use of DVDs and various other recording mediums may alternatively be used. The disk D has a circular profile with a substantially circular center hole (not shown) formed at the center thereof One of surfaces of the disk D serves as information recording surface. Note that, in FIG. 1A, the left end of the disk D is the starting side and the right side of the disk D is the ending side. A volume space 10 is provided on the information recording surface of the disk D. A lead-in area (not shown) is arranged at the starting side of the volume space 10 and stores a lead-in code that indicates the starting side of the volume space 10, while a lead-out area is arranged at the ending side of the volume space 10 and stores a lead-out code that indicates the ending side of the volume space 10. The volume space 10 includes a content information area 11 and a content data area 12.

The content data area 12 stores files of data necessary for reproducing the content of a video product, such as a movie, as images and content data CD that are title data. Note that, while the disk D stores image data as content data CD in the following description, the present invention is by no means limited thereto and content data CD may alternatively be, for example, music data of an audio product. The content data CD include a plurality of separated chapter data CPm (m being a natural number), each for a scene. In other words, the disk D stores a content having a plurality of chapters. The chapter data CPm are arranged from the starting side of the disk D in order of chapter data CP1, chapter data CP2, ........The chapter data CPm include video data, sound data, sub video data and so on (not shown) that are necessary to show scenes with sounds when the scenes are reproduced from the chapter data CPm. The disk D may store not only a content but also a plurality of contents. *[The term "content", as used herein refers to the substance of a video product.]

As shown in FIG. 1B, the content information area 11 stores content information CJ including the file names of the disk D, the title of the content, the time and date when the content data CD are recorded, the data format, copyright-related information and chapter information which may also be referred to as title information. Data formats that can be used for the purpose of the invention include stream formats such as the program stream format of MPEG (Moving picture Coding Experts Group) 2 and the transport stream format, audio formats such as the AAC (Advanced Audio Coding) format and the Layer 3 format of MPEG 1 and video formats such as the format of MPEG 2 and that of MPEG 4. The chapter information may include the number of the chapter data CPm that the content data CD have, the leading address, the leading image, the data length of the chapter data CPm (not shown) and the file names.

### [Configuration of contents distribution system]

The configuration of the contents distribution system will be described as follows. In FIG. 2, the reference symbol 100 denotes the contents distribution system that serves as data processing system. The contents distribution system 100 is a so-called real time distribution system for distributing movies and music tunes. The contents distribution system 100 comprises a network 200, receiving devices 300 that operate both as reproducing section and terminal units and a distributing device 400 that is a data processing device operating as server.

The receiving devices 300 and the distributing device 400 are connected to the network 200. The network 200 connects the receiving devices 300 and the distributing device 400 to allow them to transmit/receive information. The network 200 may be selected from networks on the basis of a general purpose protocol such as TCP/IP (Transmission Control Protocol/Internet Protocol) which include, for instance, the Internet, intranets, and LANs (local area networks) such as Ethernets®, networks such as communication line networks and broadcasting networks that are formed by a plurality of base stations capable of transmitting/receiving information by wireless mediums and also wireless mediums by which the receiving devices 300 and the distributing device 400 can directly exchange information. Wireless mediums include radio waves, light, sound waves, electromagnetic waves, etc..

The receiving device 300 that can be used for the purpose of the invention may, for example, be a personal computer, a television set, a stereophonic audio set, a PDA (personal digital assistant) and the like. The receiving device 300 can request distribution of any of the contents accumulated in the distributing device 400 by way of the network 200 and receive the content and/or the synoptic menu distributed from the distributing device 400 by way of the network 200, which will be reproduced and displayed by it for viewing. As shown in FIG. 3, the receiving device 300 comprises a transceiver 310 for transmitting/receiving information, an operation unit 320, a display 330, an audio output section 340, a memory 350 and a processor 360 that also serves as request generator.

The transceiver 310 is connected to the distributing device 400 by way of the network 200 and also to the processor 360. The transceiver 310 can receive a terminal signal St from the distributing device 400 by way of the network 200, and upon receiving the terminal signal St, the transceiver 310 performs a predefined input interface processing operation and outputs a processing terminal signal Stt to the processor 360. Additionally, the transceiver 310 also can receive a processing terminal signal Stt from the processor 360, and upon receiving and acquiring the processing terminal signal Stt, the transceiver 310 performs a predefined output interface processing operation and transmits the processed signal to the distributing device 400 as a terminal signal St, by way of the network 200.

The operation unit 320 typically includes a keyboard and mouse along with various operation buttons (not shown) that are used for input operations. The operation buttons may be used to specify the operation of the receiving device 300. More specifically, the operation buttons may be used to issue an instruction for acquiring a content and/or a synoptic menu by transmission by way of the network 200, an instruction for specifying the substance and the requirements of the content to be acquired, instruction for operating the acquired content such as, reproduction, forwarding or skip operation and an instruction for displaying the acquired synoptic menu. In response to the specifying operation, the operation unit 320 outputs a predetermined signal Sin to the processor 360 to complete the specifying operation. It will be appreciated that the operation unit 320 may comprise not only operation buttons but also a touch panel arranged on the display 330, a voice input arrangement and the like, for various specifying operations.

Controlled by the processor 360, the display 330 displays the images of the signals Sdp representing the video data of the content received from the processor 360 on the display screen thereof. The video data include not only the video data of the content and the video data of the synoptic menu transmitted from the distributing device 400 but also the video data of TV images received by a TV set (not shown), the video data of images stored in an external recording medium and read by a drive such as an optical disk or a magnetic disk, and the video data of images of video data stored in the memory. A liquid crystal panel, an organic electroluminescence panel, a PDP (plasma display panel) or a CRT (cathode ray tube) may be used for the display 330.

The audio output section 340 has a voicing section such as a loudspeaker (not shown). The audio output section 340 is controlled by the processor 360 so as to output sounds corresponding to the signals Sad representing the audio data of the content distributed from the distributing device 400 by the voicing section. The voicing section can also output TV sound data received by a TV set (not shown), sound data stored in an optical disk or a magnetic disk, and the like.

The memory 350 stores the synoptic menu acquired by way of the network 200 and the specified items that are input by the operation unit 320. Additionally, the memory 350 stores various programs to be executed on the OS (operating system) that controls the entire operation of the receiving device 300. The memory 350 may be a recording medium such as a HD (hard disk) or a magneto-optical disk that is provided with a drive and a driver necessary for readably storing data.

The processor 360 has various input/output ports (not shown), such as a communication port to which the transceiver 310 is connected, a key input port to which the operation unit 320 is connected, an audio control port to which the audio output section 340 is connected, a memory port to which the memory 350 is connected, a display control port to which the display 330 is connected. The processor 360 also has a display controller (not shown), which is a computer program, to be used for controlling the display 330 for it to display various reproduced information.

The distributing device 400 is adapted to exchange information with any of the receiving devices 300 via the network 200. As shown in FIG. 4, the distributing device 400 has a data reading section 410, an HDD (hard disk drive) 420 that is a storage section, a contents distributor 430 that serves as a computing section, and a contents administrator 440 that also serves as a computing section.

The data reading section 410 is adapted to select a disk D out of the plurality of disks it has, reads the content data CD recorded on the selected disk D and outputs them to the HDD 420. The data reading section 410 is provided with a changer 411 and a drive 412.

The changer 411 is adapted to exchange information with the content administration mechanism 440. The changer 411 retrievably contains a plurality of disks D that store content data CD and changes the disk D mounted on the drive 412. The changer 411 has a housing section 411A and a moving section 411B along with a disk moving in/moving out section and a changer processing section (not shown).

The housing section 411A contains disks D. The housing section 411A is provided with a plurality of longitudinally arranged slots for containing disks D, which slots are provided respectively with slot numbers N that are used as information on the positions of the contained disks D. While the housing section 411A has longitudinally arranged slots in the above description, it may alternatively have transversally arranged slots or slots that are arranged along the circumference of a circle.

The moving section 411B is adapted to take out the disk D mounted on the drive 412 and contain it in the housing section 411A. It is also adapted to take out a disk D contained in the housing section 411A and mount it on the drive 412. The moving section 411B has a changer moving section 411C and a holder 411D.

The changer moving section 411C is adapted to move the holder 411D in a longitudinal direction so as to guide it to the vicinity of a selected one of the slots of the housing section 411A or the drive 412. The changer moving section 411C may be so designed that a rail is arranged and the holder 411D is driven to move along the rail, or a belt (not shown) is linked to the holder 411D and operated to move the holder 411D.

The holder 411D is movably fitted to the changer moving section 411C. The holder 411D is adapted to be guided to the vicinity of a selected one of the slots of the housing section 411A or the drive 412 and take out and hold the disk D contained in the slot or mounted on the drive 412. The holder 411D may be so designed as to grasp a disk D by an arm or adsorb a disk D by a vacuum pad.

The disk moving in/moving out section is adapted to move a disk D into or out of the changer 411. The disk moving in/moving out section may be so designed as to include a hole held in communication with the slot and a door adapted to close the hole or a door adapted to be opened by an operator (not shown) and a slider adapted to slide the slots to the outside when the door is opened.

The changer processing section is adapted to control the moving section 411B to replace the disk D mounted on the drive 412, based on the processing signal Sch that describes the request information requesting the disk D to be mounted on the drive 412. When a new disk D is added to one of the slots of the housing section 411A, the changer processing section generates a processing signal Sch that includes information telling the addition of the new disk and the slot number N where the disk D is mounted and outputs the processing signal Sch to the contents administrator 440.

The drive 412 is adapted to exchange information with the HDD 420 and the contents administrator 440. The drive 412 reads out the various data recorded on the disk D that is mounted on the drive 412 and outputs them to the HDD 420. The drive 412 is also adapted to multi-speed reproduction so that it can read data at a rate several times as high as the rate at which contents are recorded. Thus, it can respond to a plurality of simultaneous requests for replenishing below-described remaining data CPym (m being a natural number) from the disk D during a period of outputting below-described leading data CPxm (m being a natural number), which is also referred to partial data output period, from the HDD 420. The drive 412 has a pickup, a drive moving section, a tray, a drive processing section and so on.

The pickup is adapted to read the content data CD and the content information CJ recorded on the disk D that is mounted on the tray. More specifically, it irradiates a laser beam from a beam source (not shown) onto the information recording surface of the disk D and reads the content data CD and the content information CJ recorded on the disk D according to the beam reflected from the information recording surface.

The drive moving section is adapted to move the tray so as to cause the holder 411D to take out the disk D mounted on the tray and/or mount the disk D held by the holder 411D on the tray.

The tray is adapted to be moved by the drive moving section and allow the disk D that is transferred by the holder 411D to be mounted on it. The tray holds the disk D so that the pickup can read the various data recorded on the disk D.

The drive processing section controls the pickup to make it read the leading data CPxm and the remaining data CPym recorded on the disk D at multi-speed according to the information described in the processing signal Sw that is input from the contents administrator 440 and contains information identifying leading data CPxm and remaining data Cpym. Then, the drive processing section puts the file name described in the processing signal Svv to both the leading data CPxm and the remaining data CPym. Subsequently, the drive processing section converts the processing signal Sw into a processing signal Svd and outputs the signal Svd to the HDD 420 to make the HDD store the signal. When a disk D is mounted on the tray, the drive processing section generates a processing signal Svv for notifying the fact and outputs the signal Svv to the contents administrator 440.

The HDD 420 is a storage section whose reading speed for reading the stored data and outputting them is higher than the reading speed of the drive 412 for reading the data recorded on the disk D and outputting them. The HDD 420 exchanges information with the drive 412, the contents distributor 430 and the contents administrator 440. The HDD 420 has a content administration information area 421, a content partial data area 422 and a content remaining data area 423. While the HDD 420 has the above listed three areas, the HDD 420 may alternatively have a single area or four or more than four areas. Additionally, while a HDD is provided as storage section in this embodiment, a solid state memory or some other memory whose reading speed is higher than the reading speed of the data reading section 410 may alternatively be provided as storage section.

The content administration information area 421 stores content administration information CK, which will be described in greater detail hereinafter, described in the processing signal Sds input from the contents administrator 440 as file so that the information CK may be read out at any time. The content administration information CK stored in the content administration information area 421 is updated from time to time by the contents administrator 440. As a disk D is taken out of the changer 411, the content administration information CK on the disk D is erased at any time by the contents administrator 440.

The content partial data area 422 stores the leading data CPxm described in the processing signal Svd input from the drive 412 as file so that the leading data may be read out at any time. As a disk D is taken out from the changer 411, the leading data CPxm on the taken out disk D are erased at any time by the contents distributor 430.

The content remaining data area 423 stores the remaining data CPym described in the processing signal Svd input from the drive 412 as file so that the remaining data may be read out at any time. As the distribution of a content to any of the receiving devices 300 is completed, the remaining data CPym on the content that has been distributed is erased at any time by the contents distributor 430.

The contents distributor 430 exchanges information with any of the receiving devices 300, the HDD 420 and the contents administrator 440. Upon receiving a request signal from any of the receiving devices 300, the contents distributor 430 distributes a content, a synoptic menu and the like to the requesting receiving device 300 according to the request signal. The contents distributor 430 can distribute different contents and synoptic menus simultaneously to a plurality of receiving devices 300. As shown in FIG. 5, the contents distributor 430 includes an interface 431, a memory 432, and a distribution processor 433 that also serves as a request signal acquiring section and so on.

The interface 431 executes the input interface processing operation defined in advance on the distribution signal Sh input to the interface by way of the network 200 and outputs the processed signal to the distribution processor 433 as processing signal Shk. Upon receiving the processing signal Shk to be transmitted to one of the receiving devices 300 from the distribution processor 433, the interface 431 executes a predefined output interface processing operation on the processing signal Shk input to the interface and outputs the processed signal to the receiving device 300 by way of the network 200 as distribution signal Sh.

The memory 432 stores the content administration information CK read out from the content administration information area 421 so that the information CK may be read out at any time. The memory 432 also stores various programs to be operated on the OS (operating system) that controls the operation of the contents distributor 430.

The distribution processor 433 includes a synoptic menu output section 433A and a data output section 433B that serves as controller, partial data acquiring section and remaining data acquiring section, which sections are realized by some of the programs stored in the memory 432.

The synoptic menu output section 433A prepares a synoptic menu according to the request from any of the receiving devices 300 and outputs the synoptic menu to the interface 432. More specifically, the synoptic menu output section 433A recognizes the information that is described in the processing signal Shk input from the interface 431, requesting distribution of a synoptic menu. Then, the synoptic menu output section 433A retrieves the content administration information CK stored in the content administration information area 421 as processing signal Sdf and stores the signal Sdf in the memory 432 so that the signal Sdf may be read out at any time. Then, the synoptic menu output section 433A reads out the content administration information CK the output section 433A has stored in the memory 432 as memory signal Sm and prepares a synoptic menu according to the read out content administration information CK. Subsequently, the synoptic menu output section 433A appropriately converts the prepared synoptic menu into a processing signal Shk and outputs the signal Shk to the interface 431.

The data output section 433B outputs content data CD to the interface 431 according to the request issued from any of the receiving devices 300. More specifically, the data output section 433B recognizes the information described in the processing signal Shk input to the section 433B from the interface 431, requesting distribution of the content data CD specified in the processing signal Shk, and starts a distribution task. Then, the data output section 433B appropriately converts the distribution task into a processing signal Sta and outputs the signal Sta to the contents administrator 440. The data output section 433B also reads out the content administration information CK correlated with the content data CD of which distribution is requested from the content administration information area 421 as processing signal Sdf and stores the signal Sdf in the memory 432 so that it may be read out at any time. Then, the data output section 433B acquires the requested content data CD from the HDD 420 as processing signal Sdf according to the content administration information CK stored in the memory 432. Subsequently, the data output section 433B appropriately converts the acquired content data CD into processing signal Shk and outputs the signal Shk to the interface 431. Note that the data output section 433B can output different content data CD simultaneously to the interface 431.

The contents administrator 440 exchanges information with the changer 411, the drive 412, the HDD 420 and the contents distributor 430. The contents administrator 440 receives the processing signal Sch from the changer 411 and the processing signal Sta from the contents distributor 430 and controls the operation of the changer 411 and that of the drive 412. As shown in FIG 6, the contents administrator 440 includes a memory 441, an administration processor 442 that serves as computing section and so on.

The memory 441 stores the content administration information CK read out from the content administration information area 421, the content information CJ read out from the disk D, and the task list that shows the distribution tasks as received from the contents distributor 430 and so on so that they may be read out at any time. The memory 441 additionally stores various programs to be executed on the OS (operating system) that controls the entire operation of the contents administrator 440.

The administration processor 442 includes a priority assigning section 442A, a data dividing section 442B that serves as controller, an administration information processing section 442C as programs stored in the memory 441.

The priority assigning section 442A stores the distribution task described in the processing signal Sta, which is input from the contents distributor 430, in the task list stored in the memory 441 so that the distribution task may be read out at any time. When the task list stored in the memory 441 includes a plurality of distribution tasks, the priority assigning section 442A assigns priority values to the distribution tasks in a manner as will be described hereinafter.

The data dividing section 442B controls the operation of the changer 411 and that of the drive 412 so as to divide the content data CD stored in the disk D into leading data CPxm as part of the data and remaining data CPym as remaining part of the data and store them respectively in the content partial data area 422 and the content remaining data area 423. More specifically, upon receiving the processing signal Sch input from the changer 411, the data dividing section 442B recognizes the information described in the processing signal Sch, which tells that a new disk D is added to the changer 411, and other pieces of information. Then, the data dividing section 442B generates a processing signal Sch that contains information requesting the added new disk D to be mounted on the drive 412 and outputs the signal to the changer 411.

Thereafter, when the data dividing section 442B receives the processing signal Svv that is input from the drive 412, the data dividing section 442B recognizes the information telling that the disk D is mounted on the drive 412 just as described in the processing signal Svv. Then, the section 442B reads out the content information CJ correlated with the disk D from the memory 441 as memory signal Sn. Then, the data dividing section 442B identifies the leading data CPxm to be stored in the content partial data area 422 according to the content information CJ read out from the memory 441 and decides the file names for them. Subsequently, the section 442B generates part-specific information for identifying each leading data CPxm, positional information on the leading address and the tail end address, information requesting each leading data CPxm to be copied from the disk D to the content partial data area 422, a processing signal Svv having the file name of each leading data CPxm and so on and outputs them to the drive 412.

Additionally, the data dividing section 442B recognizes the content data CD requested to be distributed by a distribution task according to the priority judged by the priority assigning section 442A. Then, the data dividing section 442B reads out the content administration information CK correlated with the recognized content data CD from the content administration information area 421 as processing signal Sds and stores the signal Sds in the memory 441 so that the signal Sds may be read out at any time. Then, the data dividing section 442B reads out the content administration information CK stored in the memory 441 as memory signal Sn so as to identify the remaining data CPym to be stored in the content remaining data area 423 according to the read out content administration information CK and decide the file name of each remaining data CPym as information specific to the remaining part. Thereafter, the data dividing section 442B recognizes the slot number N of the disk D storing the content data CD according to the content administration information CK and generates processing signal Sch that contains information requesting the disk D to be mounted on the drive 412 and other pieces of information. Then, the data dividing section 442B outputs the generated processing signal Sch to the changer 411.

Subsequently, when the processing signal Svv is input from the drive 412, the data dividing section 442B recognizes the information telling that the disk D is mounted on the drive 412 described in the processing signal Svv. Then, the data dividing section 442B generates the leading address and the tail end address for identifying each remaining data CPym, information requesting each remaining data CPym to be copied from the disk D to the content remaining data area 423 and a processing signal Svv containing the file name of each remaining data CPym and outputs them to the drive 412.

The administration information processing section 442C prepares the content administration information CK to be stored in the content administration information area 421 and updates the stored information. More specifically, the administration information processing section 442C recognizes the information telling that the disk D is mounted on the drive 412 described in the processing signal Svv that is input from the drive 412. Then, the administration information processing section 442C reads out the content information CJ recorded on the disk D as processing signal Sw and stores the signal Svv in the memory 441 so that the signal Svv may be read out at any time. Thereafter, the section 442C prepares the content administration information CK by adding, if necessary, new pieces of information to the content information CJ stored in the memory 441. Then, the section 442C reads out the content administration information CK appropriately as a memory signal Sn, converts the memory signal Sn into a processing signal Sds, and stores processing signal Sds in the content administration information area 421 so that the processing signal Sds may be read out at any time.

The administration information processing section 442C reads out the content administration information CK stored in the content administration information area 421 appropriately as processing signal Sds and stores the signal Sds in the memory 441 so that the signal Sds may be read out at any time. Then, the administration information processing section 442C reads out the content administration information CK stored in the memory 441 as memory signal Sn and updates the stored information by adding, if necessary, new pieces of information. Thereafter, the administration information processing section 442C appropriately converts the updated content administration information CK into a processing signal Sds and stores the processing signal Sds in the content administration information area 421 so that the signal Sds may be readout at any time. While the content administration information CK read out from the content administration information area 421 is stored in the memory 441 once and then updated by adding new pieces of information in the above description, the present invention is by no means limited thereto and it may alternatively be so arranged that the content administration information CK stored in the content administration information area 421 is not stored in the memory 441 but updated by directly adding, if necessary, new pieces of information.

### [Operation of data distribution system]

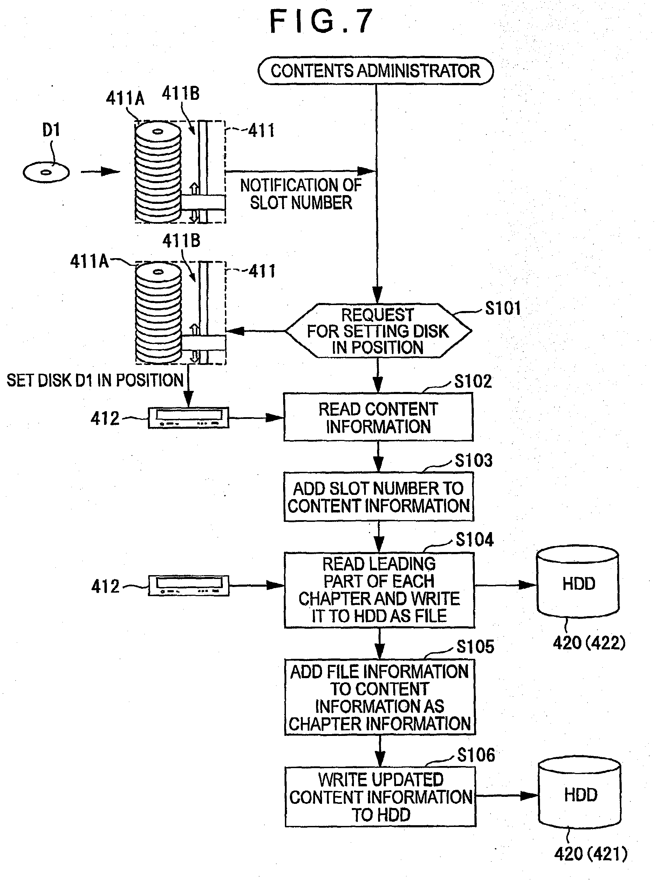

The operation of the contents distribution system 100 will be described as follows by referring to the related drawings. FIG. 7 is a schematic illustration showing an operation of adding a new disk. FIGS. 8A and 8B schematically illustrate how data are moved when a new disk is added. FIG 8A is a schematic illustration of movement of data between the disk and the HDD and FIG 8B is a schematic illustration of the substance of content administration information. FIG. 9 is a schematic illustration of an operation of distributing a synoptic menu. FIG. 10 is a schematic illustration of an operation of distributing a content. FIGS. 11A and 11B schematically illustrate how data are moved in an operation of distributing a content. FIG. 11A is a schematic illustration of movement of data between the disk and the HDD and FIG 11B is a schematic illustration of the substance of content administration information.

### [Addition of a new disk]

Firstly, an operation of adding a new disk will be described by referring to FIGS. 7 and 8. Firstly, as a new disk D1 is mounted in one of the slots arranged in the housing section 411A of the changer 411, the changer processing section detects the mounting of the disk D1. Then, the changer processing section generates information notifying that the disk D1 is added and a signal showing the slot number N1 of the slot in which the disk D1 is mounted and outputs them to the contents administrator 440.

As the contents administrator 440 receives the signal from the changer 411, the contents administrator 440 generates information requesting the disk D1 to be mounted on the drive 412 and a signal showing the slot number N1 and output them to the changer 411 (Step S101). At the same time, the contents administrator 440 stores the slot number N1 in the memory 441 so that the slot number N1 may be read out at any time.

Upon receiving the signal output in the Step S101, the changer 411 controls the moving section 411B by the changer processing section according to the slot number N1 to return the disk D0, for instance, mounted on the drive 412 to the slot where it originates, and then mount the disk D1 on the drive 412. When the disk D1 is mounted on the drive 412, the drive 412 generates a signal notifying that the disk D1 is mounted on the drive 412 and outputs the signal to the contents administrator 440.

As the contents administrator 440 receives the signal from the drive 412, the contents administrator reads the content information CJ1 recorded on the disk D1 by the administration information processing section 422C (Step S102) and stores the information CJ1 in the memory 441 so that the content information CJ1 may be read out at any time. Then, the contents administrator 440 reads the content information CJ1 stored in the memory 441 and adds the slot number N1 of the disk D1 stored in the memory 441 as shown in FIG. 8A (Step S103) and stores the updated information in the memory 441 so that the information may be read out at any time.

The contents administrator 440 reads the content information CJ1 stored in the memory 441 by the data dividing section 442B and recognizes the information stored in the disk D1 including the number of chapter data CPm and the leading address of the chapter data CPm of each chapter. Then, the contents administrator 440 identifies the leading data CPxm according to the recognized pieces of information. More specifically, as shown in FIG. 8A, the administrator 440 identifies the data having a predetermined data length from the leading address of the chapter data CPm of each chapter as leading data CPxm. Note that the data length of the leading data CPxm is defined such that the remaining data CPym, which corresponds to the part of the chapter data CPm of each chapter other than the leading data CPxm thereof as shown in FIG. 8A can be completely copied from the disk D1 to the content remaining data area 423 while the leading data CPxm is being distributed to the target receiving device 300. The contents administrator 440 defines the file name of each leading data CPxm and stores the leading data CPxm in the memory 441 so that the leading data CPxm may be read out appropriately. At the same time, the contents administrator 440 generates a signal including information requesting the leading address and the tail end address of each leading data CPxm and also requesting each leading data CPxm to be copied from the disk D1 to the content partial data area 422 and the file name of each leading data CPxm and outputs the signal to the drive 412.

Upon receiving the signal, the drive 412 reads each leading data CPxm from the disk D1 at the double speed by referring to the leading address and the tail end address of each leading data CPxm described in the signal, puts a file name to each leading data CPxm and stores it in the content partial data area 422 so that the leading data CPxm may be read out at any time (Step S104).

The contents administrator 440 adds the file name of each leading data CPxm to the content information CJ1 stored in the memory 441 by the administration information processing section 442C (Step S105) and stores each leading data CPxm in the content administration information area 421 as content administration information CK1 correlated with the disk D1 so that the leading data CPxm may be read out at any time (Step S106). At this time, as shown in FIG 8B, the content administration information CK1 includes the slot number N1, the file name of each leading data CPxm and the tail end address of each leading data CPxm (not shown) that are added to the original content information CJ1 shown in FIG. 1B.

### [Distribution of synoptic menu]

The operation of distributing a synoptic menu will be described as follows by referring to FIG. 9. Firstly, a user inputs a request for distribution of a synoptic menu of the contents that the distributing device 400 possesses by operating the operation unit 320 of the receiving device 300. As the processor 360 recognizes the request for distribution of a synoptic menu of the contents, the processor 360 generates a signal requesting distribution of a synoptic menu and transmits the signal to the distributing device 400 (Step S201).

Upon receiving the signal output in the Step S201, the distributing device 400 recognizes that the received signal requests distribution of a synoptic menu by synoptic menu output section 433A of the contents distributor 430 (Step S202). Then, the distribution device 400 retrieves the content administration information CK stored in the content administration information area 421 according to the information described in the received signal that identifies the substance of the synoptic menu including the time and date of recording and so on by the synoptic menu output section 433A. Then, the distribution device 400 reads the content administration information CK corresponding to the above information and stores the content administration information CK in the memory 432 so that it may be read out at any time (Step S203). Thereafter, the distributing device 400 prepares a synoptic menu according to the content administration information CK stored in the memory 432 (Step S204) and distributes the synoptic menu to the receiving device 300 that is identified by referring to the IP (Internet Protocol) address, for instance, transmitted from the user with the request signal (Step S205). Then, the receiving device 300 displays the received synoptic menu on the display 330 (Step S206). The synoptic menu displayed on the display 330 may include the file name, the title, the genre, the time and date of recording, copyright-related information, thumbnails and comments.

### [Distribution of a content]

The operation of distributing a content will be described as follows by referring to FIGS. 10 and 11. Assume here that the distributing device 400 receives requests for distribution of a content from three receiving devices 300 substantially simultaneously. While the operation is described below only in terms of one of the three receiving devices 300, it will be appreciated that a similar operation is conducted for each of the remaining two receiving devices 300.

Firstly, the user operates his or her receiving device 300 to generate a signal requesting distribution of the first scene of content A recorded on disk D1 and transmits the signal to the distributing device 400 (Step S301). It may be so arranged that the user directly inputs the file name from the operation unit 320 to select the first scene of the content A. Alternatively, it may be so arranged that the user selects the first scene from the synoptic menu received in the Step S206 by the cursor displayed on the display 330. It will be appreciated that the user may request distribution of not the first scene but the third scene.

Upon receiving the signal output in the Step S301, the distributing device 400 starts distribution task T1 at the data output section 433B of the contents distributor 430 (Step S302). Then, the data output section 433B retrieves and reads the content administration information CK1 stored in the content administration information area 421 and correlated with the disk D1, which stores the content A, and stores the retrieved information in the memory 432 so that the information may be read out at any time (Step S303). Thereafter, the distributing device 400 recognizes that each leading data CPxm of the content data CD1 necessary to reproduce the content A is stored in the content partial data area 422 by referring to the content administration information CK1 stored in memory 432 in the Step S303 and also that the leading data CPxm to be distributed first is the leading data CPx1 that corresponds to the first scene by referring to the file name input by the user. Then, the data output section 433B generates a signal requesting the remaining data CPym of the content data CD1 to be copied from the disk D1 to the content remaining data area 423 as processing signal Sta1 that is correlated with the distribution task T1 and outputs the signal to the contents administrator 440 (Step S304). If the user requests distribution of the scenes from third scene on, the data output section 433B outputs a processing signal Sta1 requesting the remaining data CPy3, CPy4, ... for the scenes from the third scene on to be copied.

Thereafter, while the data output section 433B reads out and acquires the leading data CPx1 stored in the content partial data area 422 (Step S305), the data output section 433B distributes the leading data CPx1 to the receiving device 300 identified by the IP address transmitted from the user with the request signal (Step S306). The receiving device 300 receives the leading data CPx1 distributed from the distributing device 400 in the Step S306 and reproduces/displays the leading data CPx1 on the display 330 (Step S307).

Upon receiving signals requesting distribution of content B and content C respectively from the remaining two receiving devices 300, the contents distributor 430 starts distribution task T2 and distribution task T3 in the Step S302 and outputs a processing signal Sta2 and a processing signal Sta3 to the contents administrator 440 in the Step S304 as shown in FIG. 10. Then, the contents distributor 430 performs the processing operation of the Step S305 and that of the Step S306 for the distribution task T2 and the distribution task T3 and distributes, for example, the leading data CPx2 of the content B to one of the receiving devices 300 and the leading data CPx4 of the content C to the other receiving device 300.

On the other hand, upon receiving the processing signals Sta1 through Sta3 output from the data output section 433B in Step the S304, the contents administrator 440 stores the distribution tasks T1 through T3 described respectively in the processing signals Sta1 through Sta3 by the priority assigning section 442A in the task list stored in the memory 441 (Step S308). Then, the contents administrator 440 assigns priorities to the distribution tasks T1 through T3 in order to distribute the contents A, B and C requested by the distribution tasks T1, T2 and T3 smoothly without interruptions (Step S309). More specifically, the priorities are determined by comprehensively considering the degree of urgency as determined by seeing the reading positions and the reading speeds of the leading data CPxm corresponding respectively to the distribution tasks T1 through T3, the expected temporal overhead relating to controlling the changer that may depend on if the contents A, B and C are stored in the same disk D1 or not and so on. For instance, for a distribution task whose degree of urgency is high, the disk D that is currently in position may be replaced by the right disk D to copy the corresponding content immediately if the temporal overhead is high. On the other hand, for a distribution task whose degree of urgency is low, the corresponding content will be copied right away if there is not other task whose degree of urgency is high and the disk D that is currently in position is the right disk D and does not need to be replaced. It is assumed that the distribution task T1 has the highest priority in the following description.

The contents administrator 440 reads the content administration information CK that corresponds to the distribution task T1 whose priority is determined to be high in the Step S309 from the content administration information area 421 and stores the content administration information CK in the memory 441 by the data dividing section 442B so that the information CK may be read out appropriately. Then, the contents administrator 440 recognizes the disk D1 where the remaining data CPym is recorded and the slot number N1 and identifies the remaining data CPym by referring to the stored content administration information CK1. More specifically, the contents administrator 440 identifies the leading address and the tail end address of each remaining data CPym by referring to the leading address of each chapter data CPm and the tail end address of each leading data CPxm described in the content administration information CK1. Then, the contents administrator 440 defines the file name for each remaining data CPym and stores it in the memory 441 so that it may be read out appropriately. Subsequently, the contents administrator 440 generates a signal containing a request for mounting the disk D1 on the drive 412 and the slot number N1 and outputs the signal to the changer 411 (Step S310).

Then, the contents administrator 440 reads the content administration information CK1 stored in the memory 441 by the administration information processing section 442C. Then, the contents administrator 440 adds the file name of each remaining data CPym stored in the memory 441 to the content administration information CK1 as shown in FIG. 11A and stores the information in the content administration information area 421 so that it may be read out at any time (Step S311). Thus, at this time, the content administration information CK1 contains a substance obtained by adding the file name of each remaining data CPym and so on to the preceding content administration information CK1 shown in FIG. 8B.

On the other hand, upon receiving the signal that is output in the Step S310, the changer 411 controls the moving section 411B by the changer processing section to replace the disk D0, for instance, mounted on the drive 412 with the disk D1. Subsequently, as the disk D1 is mounted on the drive 412, the drive 412 outputs a signal notifying the contents administrator 440 of the fact. If the disk D1 is already mounted on the drive 412 when the changer 411 receives the signal output in the Step S310, the changer 411 does not change any disk D and outputs a signal notifying the fact that the disk D1 is already in place.

Then, upon receiving the signal from the drive 412, the contents administrator 440 generates a signal which contains the leading address and the tail end address of each remaining data CPym, information requesting each remaining data CPym to be copied from the disk D to the content remaining data area 423, the file name of each remaining data CPym and the like, by the data dividing section 442B and outputs the signal to the drive 412.

Subsequently, the drive 412 reads out each remaining data CPym from the disk D1 at double speed by referring to the leading address and the tail end address of each remaining data CPym described in the received signal, adds a file name to each remaining data CPym and stores it in the content remaining data area 423 so that the data may be read out at any time (Step S312). When the contents administrator 440 completes the processing operation of copying each remaining data CPym from the disk D1 to the content remaining data area 423 for the distribution task T1, the contents administrator 440 returns to the Step S309 and starts a processing operation for the distribution task T2 that has the second highest priority.

On the other hand, while the contents distributor 430 is transmitting the leading data CPx1 in the Step S306, the contents distributor 430 reads out the content administration information CK1, to which the file name of each remaining data CPym is added in the Step S311, from the content administration information area 421 by the data output section 433B and stores the content administration information CK1 in the memory 432 so that the information CK1 may be read out appropriately (Step S313). Then, the contents distributor 430 acquires the remaining data CPy1 copied to the content remaining data area 423 by referring to the content, administration information CK1 stored in the memory 432 in the Step S313 (Step S314) and distributes the remaining data CPy1 simultaneously with the completion of the distribution of the leading data CPx1 (Step S315). Thus, the receiving device 300 receives the remaining data CPy1 simultaneously with the completion of the reception of the leading data CPx1 and reproduces/displays it on the display 330 (Step S316).

Then, upon completion of the distribution of the remaining data CPy1, the contents distributor 430 acquires the leading data CPx2, the remaining data CPy2, the leading data CPx3, the remaining data CPy3.....and outputs them to the respective receiving devices 300 by the data output section 433B. As a result of the above -described processing operation, the content data CD1 necessary for reproducing the content A on the display 330 of the receiving device 300 are distributed to the receiving device 300 without any interruption.

Thereafter, when the distribution of the content A is completed, the data output section 433B erases the distribution task T1 from the distribution task list and also erases each of the remaining data CPym copied to the content remaining data area 423 appropriately.

As described above, with this embodiment, the leading data CPxm, which is part of the content data CD recorded on the disk D, is stored in the HDD 420 whose reading speed at which the HDD 420 reads and outputs the leading data CPxm is higher than the reading speed of the drive 412 at which the drive 412 reads and outputs the content data CD stored in the disk D. Then, as the contents distributor 430 recognizes the information requesting distribution of the content data CD, the contents distributor 430 causes the HDD 420 to read the leading data CPxm by the data output section 433B and distributes the leading data CPxm to the receiving device 300, while the content distributor 430 causes the drive 412 to read the remaining data CPym of the content data CD recorded on the disk D before it distributes the remaining data CPym to the receiving device 300.

Thus, it is so arranged that, when the contents distributor 430 recognizes a request for distribution of content data CD, it firstly distributes the leading data CPxm stored in the HDD 420 whose reading speed is higher than the reading speed of the drive 412 to the receiving device 300 so that it is possible to quickly distribute the content data CD in response to the request of the user. Additionally, it is so arranged that not the entire content data CD but only the leading data CPxm is stored in the HDD 420 and, when there is a request for distribution of the content data CD, the drive 412 is operated to read and distribute the remaining data Cpym from the disk D, while the leading data CPxm is being distributed. With this arrangement, the storage capacity of the HDD 420 that is more expensive than the disk D can be minimized. The major storage of the distributing device 400 is less expensive disks D. Thus, the distributing device 400 can be made to have a large memory capacity without raising the cost of the storage by increasing the storage capacity and the number of disks D. Thus, it is now possible to provide a less expensive distributing device 400 having a large storage capacity.

Additionally, the remaining data CPym recorded on the disk D is read out and stored in the HDD 420 by the drive 412 and the HDD 420 is caused to read the remaining data CPym and distribute the remaining data CPym to the receiving device 300. Thus, since the HDD 420 is caused to read and distribute both the leading data CPxm and the remaining data CPym, to the receiving device 300 it is possible to distribute the content data CD without any interruption.

There are provided a distribution processor 433 that acquires request information requesting distribution of content data CD and a data output section 433B that acquires the leading data CPxm and the remaining data CPym from the HDD 420 and, as the distribution processor 433 acquires and recognizes the request information, the data output section 433B distributes the acquired leading data CPxm to the receiving device 300, while acquiring the remaining data CPym, and then distributes the acquired remaining data CPym to the receiving device 300. Therefore, since the data output section 433B acquires the leading data CPxm and the remaining data CPym and then distributes them to the receiving device 300 so that the data output section 433B can adjust the timing of distributing the leading data CPxm and that of distributing the remaining data CPym. Thus, it is possible to reliably deliver the content data CD without any interruption.

The data output section 433B acquires the remaining data CPym from the HDD 420. Therefore, the time necessary for the data output section 433B to acquire the remaining data CPym can be reduced.

When the drive 412 causes the HDD 420 to store the remaining data CPym, the drive 412 also causes the HDD 420 to store remaining-part-specific information that is necessary for identifying the remaining data CPym. Therefore, the remaining data CPym can be easily identified when the data output section 433B acquires the remaining data CPym.

Then, the remaining-part-specific information is used for the file name of the remaining data CPym. Therefore, remaining data CPym can be identified easily.

After completion of the distribution of the remaining data CPym, the data output section 433B erases the remaining data CPym from the HDD 420. Therefore, the storage capacity of the HDD 420 can be minimized.

When the distributing device 400 recognizes different distribution requests from a plurality of receiving devices 300, the sequence according to which the remaining data CPym are stored in the HDD 420 is defined by the priority assigning section 442A. Thus, it is possible to distribute content data CD to each of the distribution requests without any interruption.

The priority assigning section 442A defines the sequence according to the degree of urgency for copying that is determined on the basis of the remaining volume of the leading data CPxm that is being delivered. Therefore, the content data CD can be delivered without any interruption in response to each distribution request.

Additionally, the sequence is defined on the basis of the time necessary for the drive 412 to read out the remaining data CPym corresponding to each distribution request from the disk D and stores it in the HDD 420. Thus, the processing operation of copying the remaining data CPym from the disk D to the HDD 420 can be conducted efficiently.

A leading part of the content data CD to be stored in the HDD 420 is defined as leading data CPxm. Thus, the content can be delivered from the very beginning part thereof.

The drive 412 stores part-specific information necessary for identifying the leading data CPxm when storing the leading data CPxm in the HDD 420. Thus, the remaining data CPym can be identified with ease by referring to the part-specific information.

The part-specific information is made to include the leading address and the tail end address of the leading data CPxm. Therefore, the remaining data CPym can be identified easily.

The drive 412 can read out and output one of a plurality of chapter data CPm recorded on the disk D. The distributing device 400 causes the HDD 420 to store the leading data CPxm of each chapter data CPm that is part of the chapter data CPm and the data output section 433B to distribute the leading data CPxm corresponding to the content data CD that is requested for distribution, while it causes the drive 412 to read the remaining data CPym that corresponds to the leading data CPxm. With such arrangement, it is possible to distribute chapter data CPm that satisfy the taste of the user to improve the convenience and broaden the scope of application of the system.

The distributing device 400 causes the HDD 420 to store the content administration information CK describing chapter information on the chapter data CPm recorded on the disk D. Then, it retrieves and recognizes the leading data CPxm that corresponds to the chapter data CPm that is requested for distribution by referring to the chapter information described in the content administration information CK. With this arrangement, it is easy to identify the leading data CPxm that corresponds to the chapter data CPm that is requested for distribution so that any distribution request can be responded quickly.

Chapter information includes the file name of chapter data CPm and the distributing device 400 retrieves and recognizes the leading data CPxm that corresponds to the chapter data CPm that is requested for distribution by referring to the file name. Thus, it is easy to identify the leading data CPxm that corresponds to the chapter data CPm that is requested for distribution so that any distribution request can be responded quickly.

There is provided a changer 411 that is adapted to removably contain a disk D and serves as data reading section 410. With this arrangement, it is possible to raise the storage capacity of the distributing device 400 without large cost. Additionally, the content data CD can be easily updated simply by replacing a disk D. When copying the remaining data CPym of the content data CD that is requested for distribution to the HDD 420, the disk D storing the remaining data CPym is retrieved by referring to the slot number N of the changer 411 and mounted on the drive 412. With this arrangement, the disk D can be identified with ease and the remaining data CPym can be copied to the HDD 420 quickly.

Finally, the remaining data CPym is distributed immediately after the completion of the distribution of the leading data CPxm. Thus, the content data CD can be distributed continuously without any interruption.

### [Modifications to the embodiment]

The present invention is by no means limited to the above described embodiment, which may be altered and/or modified in various different ways without departing from the scope of the invention in order to achieve the object thereof.

While the data output section 433B is acquires the leading data CPxm and the remaining data CPym once and distributes the leading data CPxm and the remaining data CPym to the related receiving device 300 in the above embodiment, it may alternatively be so arranged that the leading data CPxm and the remaining data CPym are distributed respectively and directly from the HDD 420 and the drive 412 to the receiving device 300 without using the data output section 433B.

Similarly, while the dive 412 copies the remaining data CPym to the HDD 420 and the data output section 433B acquires the remaining data CPym from the HDD 420 in the above embodiment, it may alternatively be so arranged that the data output section 433B directly acquires the remaining data CPym from the drive 412.

While the CPym is erased from the HDD 420 after distribution in the above embodiment, it may alternatively be invalidated without being erased. With this arrangement, when the distributing device 400 receives another request for distribution of the content data CD including the remaining data CPym, it can immediately validate the remaining data CPym for use. Then, the processing operation for copying the remaining data CPym from the disk D to the HDD 420 can be omitted.

While the leading data CPxm is made to have a predetermined data length from the leading address of the chapter data CPm in the above embodiment, the data length of the leading data CPxm may be defined according to the data format of the content data CD. Then, the data length of the leading data CPxm can be defined appropriately according to the data format.

While a disk D is stored a content having a plurality of chapters in the above embodiment, it may alternatively be so arranged that a disk D stores a content having a chapter or a plurality of contents. For example, if a disk D stores a plurality of contents, the title, the time and date of recording of the content data CD, the data format, copyright-related information, chapter information of each content will be contained in the content information shown in FIG. 1B.

While the drive 412 is adapted to read the data stored in the disk D as data reading section and HDD 420 is operated as storage section in the distributing device 400 of the above embodiment, any other combination may alternatively be used so long as the reading speed of the storage section is higher than the reading speed of the data reading section. For example, when a solid state memory is used as storage section, a HDD may be used as data reading section and also as recording medium.

While the distribution task T2 is processed after processing the distribution task T1 for processing each distribution task in the above embodiment, it may alternatively be so arranged that the distribution task T2 is processed after the completion of the operation of copying the remaining data CPy1, CPy2 for the purpose of processing the distribution task T1 and subsequently the remaining data CPy3 is copied depending on degree of urgency.

While the remaining data CPym left in the HDD 420 is erased after copying it and distributing the content data D in the above embodiment, the remaining data CPym may alternatively be erased sequentially as it is distributed. With this arrangement, the time during which the remaining data CPym is stored in the HDD 420 is curtailed so that the storage capacity of the HDD 420 can be reduced.

While the contents distribution system 100 is adapted to distribute content data CD of the distributing device 400 by way of the network 200 in the above embodiment, a data processing device that can output data without using a network 200 may alternatively be adopted for the purpose of the invention. With such a contents distribution system, a DVD storing broadcast contents or a CD storing music may be played on a home-use player so that the user may enjoy the contents personally.

While content data CD are distributed from the distributing device 400 in response to a request from a receiving device 300 in the above embodiment, it may alternatively be so arranged that the distributing device 400 arbitrarily distributes contents.

The specific configuration and the procedures that come to existence when embodying the present invention will be modified and/or altered appropriately without departing from the scope of the present invention.

### [Effects and Advantages of the Embodiment]

As described above in detail, with the above described embodiment, the leading data CPxm that is part of the content data CD stored on a disk D is read out and stored in the HDD 420 that has a reading speed higher than the reading speed of the drive 412 at which the latter reads the content data CD stored on the disk and output them. As request information requesting distribution of the content data CD is recognized, the embodiment causes the HDD 420 to read out the leading data CPxm by the data output section 433B and distribute it, while it causes the drive 412 to read the remaining data CPym of the content data CD recorded on the disk D and distribute it to the requesting receiving device 300.

Thus, it is so arranged that, upon recognizing a request for distribution of the content data CD, the embodiment firstly distributes the leading data CPxm that is stored in the HDD 420 having a reading speed higher than that of the drive 412 so that consequently the content data CD can be distributed quickly in response to the request of the user. Additionally, it is so arranged that not the entire content data CD but only the leading data CPxm is stored in the HDD 420 and, when a request for distribution of the content data CD is recognized, the remaining data CPym is read out from the disk D by the drive 412 and distributed, while the leading data CPxm is being distributed. Thus, the storage capacity of the HDD 420 that is more expensive than the disk D can be minimized. As a result, the major storage of the distributing device 400 is less expensive disks D. Thus, the distributing device 400 can be made to have a large memory capacity without raising the cost of the storage by increasing the storage capacity and the number of disks D. Thus, it is now possible to provide a less expensive distributing device 400 having a large storage capacity.

## Claims

1. A data processing device adapted to output data recorded in recording mediums, the device comprising:
a data reading section for reading data recorded in the recording mediums and outputting them;
a storage section for storing part of the data, the storage section having a reading speed for reading the stored data and outputting them higher than a reading speed of the data reading section; and
a controller for causing the storage section to read and output the part of the data stored therein by recognizing a request signal requesting output of the data, and for causing the data reading section to read and output the remaining part of the data other than the part output from the storage section.

2. A data processing device according to claim 1, wherein
the controller is adapted to cause the storage section to read and output the part of the data stored in the storage section, while causing the data reading section to read the remaining part of the data output from the storage section and store it in the storage section and sequentially read and output the remaining part of the data from the storage section.

3. A data processing device adapted to output data recorded in recording mediums, the device comprising:
a data reading section for reading data recorded in the recording mediums and outputting them;
a storage section for storing part of the data, the storage section having a reading speed for reading the stored data and outputting them higher than a reading speed of the data reading section;
a request signal acquiring section for acquiring a request signal requesting output of the data;
a partial data acquiring section for acquiring part of the requested data from the storage section;
a remaining data acquiring section for acquiring the remaining part of the requested data from the data reading section other than the part; and
a controller for causing the partial data acquiring section to acquire and output the part of the data upon recognition of the acquisition of the request signal by the request signal acquiring section, while causing the remaining data acquiring section to acquire and output the remaining part of the data.

4. A data processing device according to claim 3, wherein
the controller is adapted to cause the partial data acquiring section to read and output the part of the data, while causing the data reading section to read the remaining part of the data and stores it in the storage section and the remaining data acquiring section to acquire and output the remaining part of the data.

5. A data processing device according to claim 2 or 4, wherein
the data reading section is adapted to additionally store remaining-part-specific information to identify the remaining part of the data in the storage section and
the storage section is adapted to read and output the remaining part of the data based on the remaining-part-specific information

6. A data processing device according to claim 5, wherein
the remaining-part-specific information is the file name of the remaining part of the data.

7. A data processing device according to any of claim 2 and claims 4 through 6, wherein
the controller is adapted to erase the remaining part of the data stored in the storage section after the part is output.

8. A data processing device according to any of claim 2 and claims 4 through 6, wherein
the controller is adapted to invalidate the remaining part of the data stored in the storage section after the part is output.

9. A data processing device according to any of claim 2 and claims 4 through 8, wherein
the controller is capable of recognize a plurality of different request signals requesting output of the data and
provided with a priority assigning section for defining the sequence in which the remaining parts of the data corresponding to the data requested by the respective request signals are stored in the storage section in the case that the plurality of request signals are recognized.

10. A data processing device according to claim 9, wherein the priority assigning section defines the sequence in the descending order of the remaining volumes of the parts of data output and transmitted by the controller in response to the data requested by the respective request signals.

11. A data processing device according to claim 9 or 10, wherein the priority assigning section defines the sequence according to the periods of time necessary for the data reading section to read and output the remaining parts of the data corresponding to the data requested by the respective request signals.

12. A data processing device according to any of claims 1 through 11, wherein
the data has a data string structure to be reproduced and output by a reproducing section and
the part of data stored in the storage section is a leading part of the data string structure.

13. A data processing device according to claim 12, wherein
the storage section is adapted to store part-specific information correlating with the part of data so as to be used to identify the part of data and
the data reading section reads the remaining part of data based on the part-specific information correlated with the part of data.

14. A data processing device according to claim 13, wherein the part-specific information is positional information to be used for identifying a particular position in the data string.

15. A data processing device according to any of claims 1 through 14, wherein
the data reading section is capable of reading out and outputting any of a plurality of data recorded in the recording mediums and
the storage section respectively stores parts of the data,
the controller being adapted to output the parts of the data corresponding to the data requested by the request signals, while causing the data reading section to read the corresponding remaining parts of the data.

16. A data processing device according to claim 15, wherein
the storage section additionally stores title information of each of the data recorded in the recording mediums and is adapted to retrieve and read out the parts of the data corresponding to the data requested by the request signals based on the title information.

17. A data processing device according to claim 16, wherein
the title information include the file names of the data and
the storage section is adapted to retrieve and read out the parts of the data corresponding to the data requested by the request signals based on the file names.

18. A data processing device according to any of claims 1 through 17, wherein
the data reading section is adapted to select the recording medium storing the data corresponding to the data requested by the request signals and read out the remaining part of data based on the information on the mounting positions where the plurality of recording mediums are removably mounted.

19. A data processing device according to any of claims 1 through 18, wherein
the data length of the part of data stored in the storage section is defined based on the data format of the data.

20. A data processing device according to any of claims 1 through 19, wherein
the controller is adapted to output the part of data first and then output the remaining part of data.

21. A data processing system comprising:
a data processing device according to any of claims 1 through 20; and
at least a terminal unit connected to the data processing device by way of a network so as to transmit signals to and receive signals from the data processing device, the terminal unit having:
a request signal generator for generating a request signal; and
a transceiver for transmitting the request signal to the data processing device by way of the network and receiving the data output

22. A data processing system for outputting data from a server unit having recording mediums storing data to terminal units connected to the server unit by way of a network so as to be able to exchange various types of information;
the server unit having:
a data reading section for reading data recorded in the recording mediums and outputting them;
a storage section for storing part of the data, the storage section having a reading speed for reading the stored data and outputting them higher than the reading speed of the data reading section for reading the data recorded in the recording mediums and outputting them; and
a controller for causing the storage section to read and output the part of the data stored therein by recognizing a request signal requesting output of the data, and for causing the data reading section to read and output the remaining part of the data other than the part output from the storage section;
each of the terminal unit having:
a request signal generator for generating the request signal; and
a transceiver for transmitting the request signal to the server unit by way of the network and receiving the data output from the server unit.

23. A data processing system for outputting data from a server unit having recording mediums storing data to terminal units connected to the server unit by way of a network so as to be able to exchange various types of information;
the server unit having:
a data reading section for reading data recorded in the recording mediums and outputting them;
a storage section for storing part of the data, the storage section having a reading speed for reading the stored data and outputting them higher than the reading speed of the data reading section for reading the data recorded in the recording mediums and outputting them;
a request signal acquiring section for acquiring a request signal requesting output of the data;
a partial data acquiring section for acquiring part of the requested data from the storage section;
a remaining data acquiring section for acquiring the remaining part of the requested data from the data reading section other than the part; and
a controller for causing the partial data acquiring section to acquire and output the part of the data upon recognition of the acquisition of the request signal by the request signal acquiring section, while causing the remaining data acquiring section to acquire and output the remaining part of the data;
each of the terminal unit having:
a request signal generator for generating the request signal; and
a transceiver for transmitting the request signal to the server unit by way of the network and receiving the data output from the server unit.

24. A data processing method adapted to output data recorded in recording mediums by a computing section, the computing section:
storing part of the data in a storage section having a reading speed for reading the stored data and outputting them higher than the reading speed of a data reading section for reading the data recorded in the recording mediums and outputting them;
causing the storage section to read and output the part of the data stored therein by recognizing a request signal requesting output of the data, and causing the data reading section to read and output the remaining part of the data other than the part output from the storage section.

25. A data processing method adapted to, by a computing section, output data from a server unit having recording mediums storing the data to terminal units connected to the server unit so as to be able to exchange various types of information by way of a network, the computing section:
causing the server unit to store part of the data in a storage section having a reading speed for reading the stored data and outputting them higher than the reading speed of a data reading section for reading the data recorded in the recording mediums and outputting them;
causing each of the terminal units to generate a request signal requesting output of the data and transmit the request signal to the server unit by way of the network; and
causing the server unit to acquire and recognize the request signal and read out and output the part of data stored in the storage section, while causing the data reading section to read and output the remaining part of the data other than the part of the data output from the storage section.

26. A data processing program adapted to cause a computing section to execute a data processing method according to claim 24 or 25.

27. A recording medium storing the data processing program according to claim 26 so as to be read out by a computing section.
